# EUROPÄISCHE PATENTANMELDUNG

(11) **EP 1 026 048 A2**
(43) Veröffentlichungstag der Anmeldung: **09.08.2000**
(21) Anmeldenummer: 00101356.4
(22) Anmeldetag: 24.01.2000
(51) Int. Cl.: B60R 21/16

(54) **Sicherheitsvorrichtung für ein Kraftfahrzeug mit einem Seitenairbag**

(30) Priorität: 05.02.1999 DE 19904739
(71) Anmelder: Volkswagen Aktiengesellschaft, 38436 Wolfsburg (DE)
(72) Erfinder: Sinnhuber, Ruprecht, Dipl.-Ing., 38518 Gifhorn (DE)

(57) **Zusammenfassung**

Die Erfindung betrifft eine Sicherheitsvorrichtung (1) für ein Kraftfahrzeug mit einem Seitenairbag (9). Dieser Seitenairbag (9) ist mittels wenigstens eines, bei einem sensierten Fahrzeugaufprall aktivierbaren Gasgenerators (14) aufblasbar. Erfindungsgemäß ist der Seitenairbag (9) ein kombinierter Becken-/Thoraxairbag, bei dem der unterhalb des Thoraxairbags (11) liegende Beckenairbag (10) zeitlich vor dem Thoraxairbag (11) aufblasbar ist. Vorzugsweise ist der Beckenairbag (10) härter als der Thoraxairbag (11) aufblasbar. Damit wird eine Sicherheitsvorrichtung (1) für ein Kraftfahrzeug mit einem Seitenairbag (9) geschaffen, die auf Belastungsmöglichkeiten eines Insassen und einen Ablauf eines Seitenaufpralls mit guter Abstützfunktion abgestimmt ist.

## Beschreibung

Die Erfindung betrifft eine Sicherheitsvorrichtung für ein Kraftfahrzeug mit einem Seitenairbag nach dem Oberbegriff des Anspruchs 1.

Sicherheitsvorrichtungen für ein Kraftfahrzeug mit einem Seitenairbag sind allgemein bekannt. Dabei ist jeweils ein Seitenairbag bei einem Fahrzeugseitenaufprall in Abhängigkeit der Aufprallverzögerung über zugeordnete, aktivierbare Gasgeneratoren aufblasbar, um einen Seitenaufprall eines Insassen gedämpft abzufangen.

Ein Problem für eine gute Abstützfunktion besteht bei solchen Seitenairbags darin, daß zwischen einem Insassen und einer benachbarten Fahrzeugseitenwand relativ wenig Raum zum Aufblasen eines Seitenairbags und damit nur ein relativ geringer Verzögerungsweg zur Verfügung steht.

Aufgabe der Erfindung ist es, eine Sicherheitsvorrichtung für ein Kraftfahrzeug mit einem Seitenairbag so weiterzubilden, daß die Abstützfunktion der Anordnung verbessert wird.

Diese Aufgabe wird mit den Merkmalen des Anspruchs 1 gelöst.

Gemäß Anspruch 1 ist der Seitenairbag ein kombinierter Becken-/Thoraxairbag, wobei der unterhalb des Thoraxairbags liegende Beckenairbag zeitlich vor dem Thoraxairbag aufblasbar ist. Vorzugsweise ist der Beckenairbag härter als der Thoraxairbag aufblasbar.

Damit wird vorteilhaft erreicht, daß ein Insasse bei einem Seitenaufprall zuerst im Beckenbereich und dann im Thoraxbereich abgestützt wird. Im Beckenbereich kann ein Insasse ohne eine Verletzungsgefahr relativ höher belastet werden als im Thoraxbereich. Entsprechend kann der Beckenairbag härter ausgelegt werden, so daß über den Lastpfad des Beckenairbags mehr Aufprallenergie als über den Thoraxairbag abgebaut werden kann.

Damit wird insgesamt eine Seitenairbaganordnung geschaffen, die auf Belastungsmöglichkeiten eines Insassen und einen Ablauf eines Seitenaufpralls mit guter Abstützfunktion abgestimmt ist.

In einer bevorzugten Ausführungsform wird wenigstens ein Airbagmodul unmittelbar in einem, einer Fahrzeugaußenseite zugewandten Seitenbereich eines Fahrzeugsitzes untergebracht. Insbesondere eignen sich dazu entsprechende Seitenwände eines Sitzteils und/oder Lehnenteils. Bei einer solchen Anordnung wird erreicht, daß das Airbagmodul bei einer Fahrzeugsitzverstellung mitbewegt wird und damit ein Seitenairbag unabhängig von der jeweiligen Sitzeinstellung für einen Insassen richtig positioniert ist.

Der kombinierte Becken-/Thoraxairbag kann grundsätzlich aus zwei separaten, übereinander aufblasbaren Airbags als Beckenairbag und Thoraxairbag bestehen, denen jeweils ein Gasgenerator oder eine Stufe eines Stufengenerators zugeordnet ist.

Vorzugsweise wird jedoch der kombinierte Becken-/Thoraxairbag als Zweikammerairbag ausgebildet, mit einer Beckenairbagkammer und einer davon durch eine Trennwand getrennten Thoraxairbagkammer. Die Füllung der Beckenairbagkammer und die zeitlich versetzte Füllung der Thoraxairbagkammer kann durch einen jeweils zugeordneten Gasgenerator und/oder durch je eine zugeordnete Stufe eines Stufengenerators erfolgen.

Eine Füllung eines solchen Zweikammerairbags kann je nach den Gegebenheiten vorteilhaft auch durch nur einen Gasgenerator erfolgen, wobei die Beckenairbagkammer unmittelbar über den Gasgenerator und die Thoraxairbagkammer durch wenigstens eine, vorzugsweise mehrere Drosselöffnungen in der Trennwand hindurch aufblasbar ist. Falls erforderlich, können diese Drosselöffnungen mit Rückschlagventilen versehen werden, um geeignete, abgestimmte Standzeiten für die jeweiligen Airbags zu erhalten.

Anhand einer Zeichnung wird die Erfindung näher erläutert.

Die einzige Figur zeigt schematisch eine Sicherheitsvorrichtung 1 für ein Kraftfahrzeug an einem Fahrzeugsitz 5. Dieser Fahrzeugsitz 5 besteht aus einem Sitzteil 4, einem Lehnenteil 8 sowie einer an der Oberseite des Lehnenteils 8 angeordneten Kopfstütze 15, die über Kopfstützenstangen 16 verschiebbar und abnehmbar an dem Lehnenteil 8 angeordnet ist.

Die Sicherheitsvorrichtung 1 umfaßt ein Airbagmodul 2, das an einer Seitenwand 3 des Sitzteils 4 des Fahrzeugsitzes 5 angeordnet ist. Diese Seitenwand 3 des Sitzteils 4 liegt einer hier nicht dargestellten Außenseite des Fahrzeugs gegenüber.

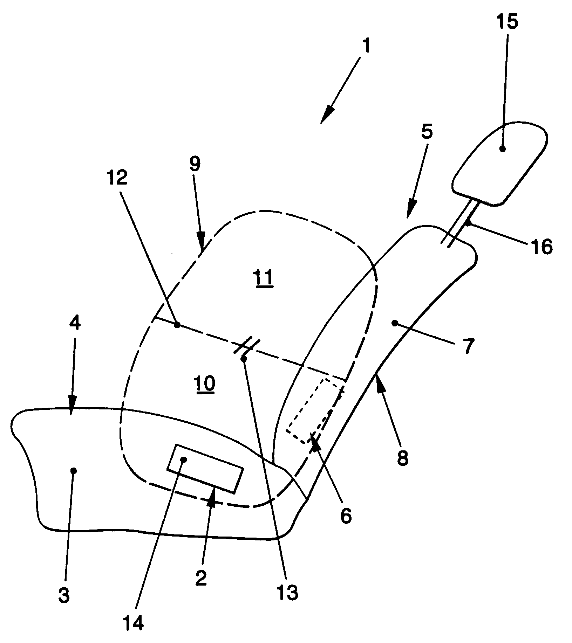

In einer alternativen, in der Fig. 1 strichliert eingezeichneten Ausführungsform ist ein Airbagmodul 6 an einer Seitenwand 7 eines Lehnenteils 8 des Fahrzeugsitzes 5 angeordnet.

Wie dies aus der einzigen Figur weiter ersichtlich ist, umfaßt die Sicherheitsvorrichtung 1 einen Zweikammerairbag 9 als kombinierten Becken-/Thoraxairbag sowie einen Gasgenerator 14, über den der Zweikammerairbag 9 im Crashfall aufblasbar ist.

Der Zweikammerairbag 9 weist im aufgeblasenem Zustand eine Beckenairbagkammer 10 und eine Thoraxairbagkammer 11 auf, wobei die Beckenairbagkammer 10 unterhalb der Thoraxairbagkammer 11 liegt. Im aufgeblasenen Zustand ist die Beckenairbagkammer 10 von der Thoraxairbagkammer 11 durch eine Trennwand 12 getrennt.

In der Trennwand 12 ist wenigstens eine Drosselöffnung 13 ausgebildet, durch die hindurch Gas von der Beckenairbagkammer 10 in die Thoraxairbagkammer 11 strömen kann.

Die Funktionsweise der Sicherheitsvorrichtung 1 wird nachfolgend ebenfalls anhand der einzigen Figur näher erläutert:

Bei einem Fahrzeugseitenaufprall wird über fahrzeugseitig angeordnete Crashsensoren das Airbagmodul 2 angesteuert und der Gasgenerator 14 gezündet. Von dem Gasgenerator 14 wird zuerst die Beckenairbagkammer 10 relativ hart aufgeblasen, so daß ein hier nicht dargestellter Fahrzeuginsasse bei einem Seitenaufprall zuerst im Beckenbereich abgestützt wird. In diesem Beckenbereich kann der Fahrzeuginsasse ohne eine Verletzungsgefahr relativ höher belastet werden als im Thoraxbereich.

Anschließend, d. h. zeitlich versetzt zu dem Aufblasen der Beckenairbagkammer 10, wird die Thoraxairbagkammer 11 über die wenigstens eine Drosselöffnung 13 in der Trennwand 12 hindurch autgeblasen. Um geeignete, abgestimmte Standzeiten für den Zweikammerairbag 9 zu erreichen, ist diese wenigstens eine Drosselöffnung 13 mit einem Rückschlagventil versehen, was hier allerdings nicht näher dargestellt ist.

### BEZUGSZEICHENLISTE

- 1: Sicherheitsvorrichtung
- 2: Airbagmodul
- 3: Seitenwand
- 4: Sitzteil
- 5: Fahrzeugsitz
- 6: Airbagmodul
- 7: Seitenwand
- 8: Lehnenteil
- 9: Zweikammerairbag
- 10: Beckenairbagkammer
- 11: Thoraxairbagkammer
- 12: Trennwand
- 13: Drosselöffnung
- 14: Gasgenerator
- 15: Kopfstütze
- 16: Kopfstützenstange

## Patentansprüche

1. Sicherheitsvorrichtung für ein Kraftfahrzeug mit einem Seitenairbag, wobei dieser mittels wenigstens eines, bei einem sensierten Fahrzeugaufprall aktivierbaren Gasgenerators aufblasbar ist,
**dadurch gekennzeichnet,**
daß der Seitenairbag (9) ein kombinierter Becken-/Thoraxairbag ist und der unterhalb des Thoraxairbags (11) liegende Beckenairbag (10) zeitlich vor dem Thoraxairbag (11) aufblasbar ist.

2. Sicherheitsvorrichtung nach Anspruch 1, **dadurch gekennzeichnet,** daß der Beckenairbag (10) härter als der Thoraxairbag (11) aufblasbar ist.

3. Sicherheitsvorrichtung nach Anspruch 1 oder Anspruch 2, **dadurch gekennzeichnet,** daß wenigstens ein Airbagmodul (2; 6) des kombinierten Becken/Thoraxairbags (9) an der einer benachbarten Fahrzeugaußenseite gegenüberliegenden Seitenwand (3; 7) eines Sitzteils (4) und/oder Lehnenteils (8) eines Fahrzeugsitzes (5) angeordnet ist.

4. Sicherheitsvorrichtung nach einem der Ansprüche 1 bis 3, **dadurch gekennzeichnet,** daß der kombinierte Becken-/Thoraxairbag (9) aus zwei separaten Airbags besteht, denen jeweils ein Gasgenerator oder eine Stufe eines Stufengenerators zugeordnet ist.

5. Sicherheitsvorrichtung nach einem der Ansprüche 1 bis 3, **dadurch gekennzeichnet,** daß der kombinierte Becken-/Thoraxairbag (9) ein Zweikammerairbag ist mit einer Beckenairbagkammer (10) und einer davon durch eine Trennwand (12) getrennten Thoraxairbagkammer (11).

6. Sicherheitsvorrichtung nach Anspruch 5, **dadurch gekennzeichnet**, daß die Beckenairbagkammer (10) und zeitlich versetzt die Thoraxairbagkammer (11) jeweils durch einen zugeordneten Gasgenerator (14) und/oder durch je eine zugeordnete Stufe eines Stufengenerators aufblasbar sind.

7. Sicherheitsvorrichtung nach Anspruch 5, **dadurch gekennzeichnet**, daß die Beckenairbagkammer (10) mit einem Gasgenerator (14) und die Thoraxairbagkammer (11) durch wenigstens eine, vorzugsweise mehrere Drosselöffnungen (13) in der Trennwand (12) hindurch aufblasbar ist.

8. Sicherheitsvorrichtung nach Anspruch 7, **dadurch gekennzeichnet**, daß wenigstens eine Drosselöffnung (13) ein Rückschlagventil aufweist.
